Europäisches Patentamt

European Patent Office

Office européen des brevets

(11) Veröffentlichungsnummer: **0 133 627 B2**

(12) **NEUE EUROPÄISCHE PATENTSCHRIFT**

(19)

(45) Veröffentlichungstag der neuen Patentschrift:
**18.12.91 Patentblatt 91/51**

(21) Anmeldenummer: **83111811.2**

(22) Anmeldetag: **25.11.83**

(51) Int. Cl.⁵: **F16L 5/02, F16L 41/08,
F28F 9/06**

(54) **Vorrichtung zur dichten Befestigung eines Rohres in der Öffnung einer Rohrhalteplatte.**

(30) Priorität: **03.08.83 DE 8322349 U**

(43) Veröffentlichungstag der Anmeldung:
**06.03.85 Patentblatt 85/10**

(45) Bekanntmachung des Hinweises auf die
Patenterteilung:
**09.09.87 Patentblatt 87/37**

(45) Bekanntmachung des Hinweises auf die
Entscheidung über den Einspruch:
**18.12.91 Patentblatt 91/51**

(84) Benannte Vertragsstaaten:
**DE FR IT SE**

(56) Entgegenhaltungen:
**DE-A- 2 129 096
DE-A- 2 302 770
DE-A- 2 462 401
DE-A- 3 002 140
DE-C- 1 041 750
DE-U- 1 798 515
DE-U- 7 342 159
FR-A- 926 488
FR-A- 2 517 572
US-A- 4 350 351**

(73) Patentinhaber: **Firma Carl Freudenberg
Höhnerweg 2-4
W-6940 Weinheim/Bergstrasse (DE)**

(72) Erfinder: **Bauder, Kurt
Sommergasse 44
W-6940 Weinheim (DE)**

EP 0 133 627 B2

## Beschreibung

Die Erfindung betrifft eine Vorrichtung zur dichten Befestigung eines Rohres in der Öffnung einer Rohrhalteplatte, bestehend aus einer in den Spalt zwischen Rohr und Öffnung eingefügten Hülse aus elastischem Material, die mit einem vorderseitig angeordneten Flansch an der Rohrhalteplatte anliegt, die im rückwärtigen Teil zu einem die Breite des Spaltes übersteigenden Wulst verdickt ist und die unter einer Vorspannung an einander gegenüberliegenden Wandungsbereichen der Öffnung und des Rohres anliegt, wobei die Hülse aus einem elastomeren Werkstoff hergestellt und in dem jenseits des Wulstes liegenden Bereich mit einer Verlängerung versehen ist, die einen Innendurchmesser aufweist, der geringfügig kleiner ist als der Durchmesser des Rohres.

Eine Vorrichtung der eingangs genannten Art ist bekannt aus der DE-U-7 342 159. Das damit erzielte Festlegungsergebnis ist maßgeblich abhängig von der sich nach der Montage des Rohres ergebenden, radialen Verpressung der Hülse und damit von deren Wandstärke. Diese kann fertigungsbedingt schwanken. Es ist zwar vorstellbar, die diesbezüglichen Probleme dadurch zu mildern, daß die Wandstärke der Hülse grundsätzlich sehr groß bemessen wird. In diesem Falle müssen indessen häufig erhebliche Schwierigkeiten beim Einsetzen des Rohres in Kauf genommen werden, was nicht tolerierbar ist.

Aus der US-A-4 350 351 ist eine Dichtung zur Verwendung in dem Spalt zwischen einem Rohr und einem Wanddurchbruch bekannt, die durch einen in dem Wanddurchbruch axial festgelegten Flansch gegen Verschiebung gesichert ist. Durch die Verwendung dieser Dichtung lassen sich axiale Verschiebungen des Rohres insbesondere beim Auftreten von Schwingungen nicht verhindern.

Aus der DE-U-1798 515 ist eine Dichtung für den Spalt zwischen der Bohrung eines Rohrbodens und einem Rohr bekannt, die zwei gegeneinander gerichtete, einen Doppelkonus bildende Ringkörper aus Gummi aufweist. Diese sind an den einander zugewandten, verjüngten Enden einstückig verbunden und an den voneinander abgewandten Enden relativ größeren Durchmessers mit inneren und äußeren Dichtlippen versehen. Die zugehörige Bohrung des Rohrbodens bildet ein genaues Abbild dieser Dichtung und ist, vom mittleren Bereich ausgehend in axialer Richtung beiderseits kegelig in ihrem Durchmesser erweitert. Unabhängig von der Richtung der Druckbeaufschlagung wird hierdurch stets einer der Ringkörper in den sich zunehmend verengenden Spalt zwischen dem abzudichtenden Rohr und der Bohrung hineingetrieben, was eine gute Abdichtung des Spaltes und eine feste Lagerung des Rohres bewirkt. Die zunächst erforderliche Montage des Rohres ist jedoch aus den gleichen Gründen schwierig und die Herstellung der Dichtung wegen der geforderten Genauigkeiten aufwendig.

Der Erfindung liegt die Aufgabe zugrunde, eine Vorrichtung zur dichten Befestigung eines Rohres in der Öffnung einer Rohrhalteplatte zu zeigen, die die Einhaltung hochpräziser Maßtoleranzen entbehrlich macht, die einen festen Sitz des in der Rohrhalteplatte gelagerten Rohrs auch dann gewährleistet, wenn Schwingungen einer wechselnden Frequenz eingeleitet werden und die eine einfache Montage des Rohres gestattet.

Diese Aufgabe wird erfindungsgemäß mit den kennzeichnenden Merkmalen des Patentanspruches 1 gelöst. Auf vorteilhafte Ausgestaltungen nehmen die Unteransprüche Bezug.

Die vorgeschlagene Vorrichtung besteht aus einem üblichen elastomeren Dichtungswerkstoff. beispielsweise aus Nitrilbutadien-Kautschuk, Ethylen-Propylen-Terpolymer-Kautschuk, Vinylidenfluorid-Hexafluorpropylen-Kautschuk. Acrylnitril-Chloropren-Kautschuk oder EpichlorhydrinKautschuk.

Die Härte liegt etwa im Bereich zwischen 30 und 80 Shore A. Werkstoffe dieser Art sind kostengünstig verfügbar. Sie lassen sich durch an sich bekannte Verfahren kostengünstig in die gewünschte Gestalt überführen.

Die Vorrichtung liegt zumindest mit dem vorderseitigen Flansch an der Rohrhalteplatte sowie mit der Außenseite des Wulstes an der sich in rückwärtiger Richtung erweiternden Kegelfläche der Öffnung an. Sie ist dadurch im eingebauten Zustand nahezu unverschiebbar und bewirkt eine gute axiale Festlegung des aufgenommenen Rohres. Dieses wird mindestens von der innenseite des Wulstes sowie der innenseite der Ringmembrane berührt. Letztere hat nur eine sehr geringe radiale Dicke. Der Druck des abgedichteten Mediums trägt daher unmittelbar zur Anpressung der Ringmembrane gegen den Außendurchmesser des Rohres bei. woraus neben der guten axialen Festlegung ein gutes Abdichtungsergebnis resultiert. Die Flexibilität der Ringmembrane dürfe diesbezüglich von entscheidender Bedeutung sein. Sie gewährleistet einen stetigen und festen Kontakt zwischen der Vorrichtung und dem aufgenommenen Rohr, wenn Relativbewegungen auftreten, beispielsweise als Folge der Einleitung von Schwingungen einer wechselnden Frequenz. Die vorgeschlagene Vorrichtung ist daher besonders gut geeignet für die Abdichtung und Halterung der Wärmetauscherrohre eines Luftkühlers in einem Kraftfahrzeug. Sie dämpft hier zugleich die Lärmemmision von der Oberfläche der zumeist großflächig ausgebildeten Einzelteile.

Die radiale Einspannung des aufgenommenen Rohres zeichnet sich durch eine besonders gute Elastizität und Weichheit aus, was die schalltechnische Isolierung des Rohres begünstigt. Dieser Effekt wird maßgeblich durch die Vermeidung einer statischen Verpressung der Hülsenwandung zwischen sich parallel zueinander erstreckenden Wandungsbestandteilen des Rohres und der Bohrung erzielt. Die eigentliche Einspannung in radialer Richtung des Rohres findet somit bei der vorgeschlagenen Ausführung ausschließlich zwischen der Kegelfläche der Bohrung und dem zylindrischen Rohr statt. Relativverlagerungen, beispielsweise als Folge von Schwingungen, können dadurch in besserer Weise weichelastisch aufgefangen und gedämpft werden.

Die einander gegenüberliegenden Kegelflächen der Bohrung sollen einen Winkel von 10 bis 18° einschließen.

Zur Montage eines entsprechenden Rohres wird die vorgeschlagene Vorrichtung in einem ersten Arbeitsschritt in die vorbereitete Öffnung der Rohrhalteplatte eingesetzt. Der im rückwärtigen Teil angeordnete Wulst verhindert ein selbsttätiges Herausfallen, weshalb der Arbeitsvorgang gegebenenfalls getrennt von der eigentlichen Montage der Rohre vorgenommen werden kann. Die Automation der Montage wird hierdurch sehr erleichtert. Sie läßt sich weiter vereinfachen, wenn mehrere Vorrichtungen in Form einer Matte zu einer Einheit zusammengefaßt sind. In diesem Falle erübrigt sich eine Einzelpositionierung und sämtliche Vorrichtungen können als geschlossene Einheit gleichzeitig in die zugehörigen Öffnungen der Rohrhalteplatte eingefügt werden. Dabei ergibt sich in Fällen, in denen die Matte zwischen den einzelnen Vorrichtungen in sich geschlossen und flüssigkeitsundurchlässig ist, ein zusätzlicher Korrosionsschutz der Rohrhalteplatte, was es erlaubt, bezüglich deren Herstellung auf kostengünstig verfügbare Materialien zurückzugreifen. In Fällen, in denen auf die Rohrhalteplatte zur Bildung der angrenzenden Kammer ein Oberteil aufgesetzt werden muß, kann eine entsprechende Matte im Bereich der Randzone zugleich als Dichtung für den Dichtrand des Oberteils ausgebildet sein. Beispielsweise die Herstellung des Lufkühlers für ein Kraffahrzeug läßt sich hierdurch wesentlich verbilligen.

Die zugehörigen Rohre werden in die vorgeschlagene Vorrichtung im Anschluß an deren Einfügung in die Öffnungen eingesetzt. Das geschieht durch einfaches Einschieben, und es läßt sich besonders einfach realisieren, wenn der Wulst innenseitig durch eine Kegelfläche begrenzt ist, die einen sich in rückwärtiger Richtung vermindernden Durchmesser aufweist. Auf die Verwendung eines Schmiermittels kann in diesem Falle zumeist verzichtet werden.

Eine entsprechende Maßnahme ist selbstverständlich auch in bezug auf das Einfügen der Vorrichtung in die Öffnungen denkbar. In diesem Falle weist die Hülse außenseitig zwischen dem Wulst und der Ringmembrane eine Kegelfläche auf, die beide Teile miteinander verbindet. Die erforderliche zentrische Zuordnung der Vorrichtung zu der Öffnung ergibt sich in diesem Falle weitgehend selbsttätig. Die Länge der Ringmembrane ist nicht völlig beliebig. Sie soll vorzugsweise 2- bis 5mal so groß sein wie die Dicke.

Eine beispielhafte Ausführung der vorgeschlagenen Vorrichtung ist in der in der Anlage beigefügten Zeichnung dargestellt. Sie wird nachfolgend näher erläutert :

Die Vorrichtung 1 besteht aus Gummi mit einer Härte Shore A von 75. Sie dient zur Abdichtung des Spaltes zwischen der Rohrhalteplatte 3 und einem nachträglich in die darin enthaltene Öffnung eingeführten Rohr 2 eines Luftkühlers. Das Rohr 2 hat einen Außendurchmesser von 15 mm. Es besteht aus Kupfer und bildet ein Wärmetauscherrohr. Die Rohrhalteplatte 3 besteht aus Stahlblech. Sie hat eine Dicke von 3,5 mm.

Die Vorrichtung 1 besteht aus einer axial im mittleren Bereich angeordneten Hülse 4, die im wesentlichen auf der Außen- und auf der Innenseite zylindrisch begrenzt ist und die im vorderen Teil außenseitig zu einem Flansch erweitert ist.

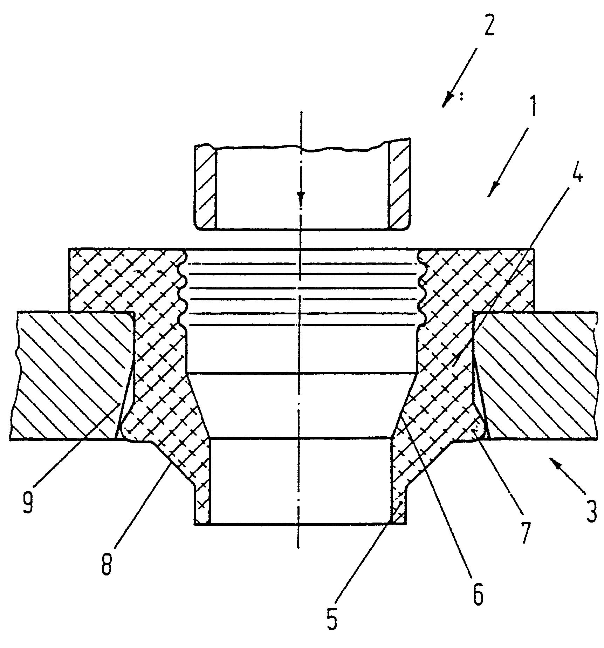

Im rückwärtigen Teil, in der Zeichnung unten wiedergegeben, ist die Hülse außen- und innenseitig zu einem Wulst verdickt. Der Wulst wird auf der Innenseite durch eine Kegelfläche 6 begrenzt, die im rückwärtigen Teil einen Innendurchmesser von 14,4 mm aufweist und die an einer Zylinderfläche endet, die zugleich die Ringmembrane 5 auf der Innenseite begrenzt.

Außenseitig ist der Wulst 7 durch ein halbkreisförmiges Profil 7 begrenzt, das im rückwärtigen Teil tangential in eine sich senkrecht zur Vorrichtungsachse erstreckende Ebene ausläuft und im vorderseitigen Teil tangential in eine Kegelfläche, die mit der Vorrichtungsachse einen Winkel von 10° einschließt. Das Profil berührt die im rückwärtigen Teil erweiterte Kegelfläche 9 der Öffnung der Rohrhalteplatte 3 axial im hinteren Drittel ihrer Erstreckung. Zwischen dem Wulst 7 und der Ringmembrane 5 ist eine Kegelfläche 8 vorgesehen. Diese soll das Einfügen der Vorrichtung in die aufnehmende Öffnung erleichtern.

Sie schließt mit der Vorrichtungsachse einen Winkel von 45° ein. Die Ringmembrane 5 hat eine radiale Dicke von 0.3 mm bei einer axialen Länge von 0.8 mm.

Die Kegelfläche 6 schließt mit der Vorrichtungsachse einen Winkel von 18° ein. Sie endet im rückwärtigen Bereich in gleicher axialer Ebene mit der rückwärtigen Begrenzung des Profils des Wulstes 7 und der Rohrhalteplatte 3.

EP 0 133 627 B2

## Patentansprüche

1. Vorrichtung zur dichten Befestigung eines Rohres (2) in der Öffnung einer Rohrhalteplatte (3), bestehend aus einer in den Spalt zwischen Rohr und Öffnung eingefüten Hülse (4) aus elastischem Material, die mit einem vorderseitig angeordneten Flansch an der Rohrhalteplatte (3) anliegt, die im rückwärtigen Teil zu einem die Breite des Spaltes übersteigenden Wulst verdickt ist und die unter einer Vorspannung an einander gegenüberliegenden Wandungsbereichen der Öffnung und des Rohres (2) anliegt, wobei die Hülse (4) aus einem elastomeren Werkstoff hergestellt ist und in dem jenseits des Wulstes liegenden Bereich mit einer Verlängetung versehen ist, die einen Innendurchmesser aufweist, des geringfügig kleiner ist als der Durchmesser des Rohres (2), dadurch gekennzeichnet daß die Verlängerung als Ringmembran (5) zylindrisch ausgebildet ist, daß der Wulst (7) innenseitig durch eine Kegelfläche (6) begrenzt, die einen sich in Richtung der Ringmembrane (5) vermindernden Durchmesser aufweist und an einer Zylinderfläche endet, die zugleich die Ringmembran (5) auf der Innenseite begrenzt und daß die Öffnung im Bereich der axialen Erstreckung des Wulstes (7) nur in rückwärtiger Richtung kegelig erweitert ist.

2. Vorrichtung nach Anspruch 1, dadurch gekennzeichnet, daß die Hülse (4) außenseitig zwischen dem Wulst und der Ringmembrane (5) durch eine Kegelfläche (8) begrenzt ist.

3. Vorrichtung nach Anspruch 1 bis 2, dadurch gekennzeichnet, daß die Dicke der Ringmembrane (5) 1 bis 3 % vom Durchmesser des abgedichteten Rohres beträgt.

4. Vorrichtung nach Anspruch 1 bis 3, dadurch gekennzeichnet, daß die axiale Länge der Ringmembrane 5 bis 15 % vom Durchmesser des abgedichteten Rohres beträgt.

## Claims

1. A device for the sealed fastening of a pipe (2) in the opening of a pipe-supporting plate (3), comprising a sleeve (4) of flexible material, which sleeve is inserted in the gap between the pipe and the opening, bears against the pipe-supporting plate (3) by a flange arranged at the front, is thickened in its rearward part to form a bead exceeding the width of the gap and, under a prestress, bears against opposite wall regions of the opening and of the pipe (2), the sleeve (4) being made of an elastomeric material and being provided in the region beyond the bead with an extension which has an internal diameter slightly smaller than the diameter of the pipe (2), characterised in that the extension is executed in form of a cylindrical ring membrane (5), that the bead (7) is bounded on the inside by a conical surface (6) which has a decreasing diameter in the direction of the ring membrane (5) and which ends at a cylinder surface which also limits the ring membrane (5) on the inside and that the opening in the region of the axial extension of the bead (7) is extended conically only in the rearward direction.

2. A device according to claim 1, characterised in that the sleeve (4) is bounded on the outside between the bead and the ring membrane (5) by a conical surface (8).

3. A device according to either of claims 1 and 2, characterised in that the thickness of the ring membrane (5) is 1 to 3% of the diameter of the sealed-off pipe.

4. A device according to any of claims 1 to 3, characterised in that the axial length of the ring membrane is 5 to 15% of the diameter of the sealed-off pipe.

## Revendications

1. Dispositif pour la fixation étanche d'un tuyau (2) dans l'ouverture d'un plaque de fixation de tuyaux (3), constitué d'une douille (4) en matériau élastique insérée dans le jeu existant entre le tuyau et l'ouverture, qui appuie sur la plaque de fixation de tuyaux (3) par une bride disposée dans la partie antérieure, qui présente dans la partie postérieure une surépaisseur formant un bourrelet recouvrant la largeur de jeu et qui appuie, sous une certaine précontrainte, sur les partie de paroi opposées de l'ouverture et du tuyau (2), la douille (4) étant réalisée en matériau élastomère et étant pourvue d'un prolongement dans la zone située au-delà du bourrelet, ce prolongement ayant un diamètre intérieur légèrement plus faible que le diamètre du tuyau (2), caractérisé en ce que le prolongement se présente sous forme d'une membrane annulaire (5) de forme cylindrique qui délimite intérieurement le bourrelet (7) par une surface conique (6) qui présente un diamètre diminuant en direction de la membrane annulaire (5) et gui se termine à une surface cylindrique qui délimite également la membrane annulaire (5) sur le côté intérieur, et en ce que l'ouverture est élargie en forme de cône, uniquement en direction vers l'arrière dans la zone de l'extension axiale du bourrelet (7).

2. Dispositif selon la revendication 1, caractérisé en ce que la douille (4) est limitée extérieurement entre

4

le bourrelet et la membrane annulaire (5) par une surface conique (8).

3. Dispositif selon les revndications 1 à 2, caractérisé en ce sens que l'épaisseur de la membrane annulaire (5) est égale à 1 à 3% du diamètre du tube à fermer de manière étanche.

4. Dispositif selon les revendications 1 à 3, caractérisé en ce que la longueur axiale de la membrane annulaire est égale à 5 à 15% du diamètre du tube à fermer de manière étanche.